# EUROPEAN PATENT APPLICATION

(11) **EP 4 554 141 A1**
(43) Date of publication of application: **14.05.2025**
(21) Application number: 23306935.0
(22) Date of filing: 09.11.2023
(51) Int. Cl.: H04L 9/06, H04L 9/08, H04L 9/32, H04L 9/40

(54) **METHOD OF ENTRUSTING DATA USING A SECURE COMPONENT**

(71) Applicant: THALES DIS FRANCE SAS, 92190 Meudon (FR)
(72) Inventor: FAHER, Mourad, 78160 MARLY LE ROI (FR); DEBOIS, Georges, 75013 PARIS (FR)
(74) Representative: Castelo, Jérôme

(57) **Abstract**

The invention relates to a method to entrust requested data at a relying party, said requested data coming from an unsecure software component in a user equipment of a user, said user equipment having a secure component storing data hash of said data and having a pseudonym.

The secure component produces a cryptogram being a concatenation of several ciphertexts successively obtained by chaining executions of a trust cryptography function using a secure component's secret key, said function being applied to successive plaintexts comprising at least the secure component's pseudonym and data hash of the data corresponding to data's references requested by the relying party which then receives and deciphers the requested data that has been enciphered by the software component using the last ciphertext concatenated in at least said cryptogram and an applicative cryptography algorithm. The cryptogram is sent to a trust service for de-concatenation and chaining executions of a trust cryptography function correlated to the trust cryptography function of the secure component to extract the secure component's pseudonym and the data hash of the data corresponding to the given data's reference in successive de-ciphered plaintexts. The method entrusts received deciphered data only if the extracted pseudonym corresponds to the received pseudonym, and if the data hash corresponding to the given data's reference extracted by the trust service corresponds to the data hash corresponding to the given data's reference calculated by the relying party.

## Description

### Field of the invention

The present invention relates to a method entrust requested data at a relying party, said requested data coming from an unsecure application or software component in a user equipment of a user. The invention also pertains to a relying party, a user equipment and trust party implementing said method.

### Background of the invention

Hardware components, typically, eSE, eUICC, iSE, HSM generally interact with software installed in a dubious environment. Such hardware component are precisely deemed to deliver proof of data integrity and authenticity. They are also offering binding to Relying Parties who consumes these data. However, the HW workload may become cumbersome and detrimental to UX, typically a eSE with a mobile wallet. In parallel the post-quantum threat is impending and the privacy requirement is a must.

In many cases, hosting or provisioning data elements onto an ICC or eSE raises the problem of performance. It consequently downgrades the user experience when such data need to be bound to eSE and thus to be encrypted before to be divulgated to the outside world.

A current solution to this issue is to store encrypted data outside of the HW component and to retrieve the data when needed. However, even if data elements are stored encrypted outside the eSE, and only input to the eSE when decipherment/encipherment is needed, this task can become a bottleneck to user experience quality.

More particularly, oversize data treatment by secure hardware component is an issue when eSE signature/encryption/validation/binding operations are needed for trust and vetting by Relying Parties. In parallel, there exists a threat in post-quantum era where regular cryptography performed by hardware component is put at question. Any alternative solutions must besides guarantee privacy.

It is thus a recurrent issue to have oversize data needing to be ciphered or deciphered by and within the secure component.

Further alternative and advantageous solutions would, accordingly, be desirable in the art.

### Summary of the invention

The present invention aims at proposing a method to perform tamper-resistant work-sharing between a secure component and a software component.

The present invention is defined, in its broadest sense, as a method to entrust requested data at a relying party, said requested data coming from an unsecure software component in a user equipment of a user, said user equipment having a secure component storing data hash of said data and having a pseudonym, said method comprising the steps of:
for the relying party, receiving, from the software component, a request for a service;
for the relying party, sending a request to the software component for data known by the software component under given data's references and for trust proof;
for the software component, sending the given data's references to the secure component;
for the secure component, producing a cryptogram being a concatenation of several ciphertexts successively obtained by chaining executions of a trust cryptography function using a secure component's secret key, said function being applied to successive plaintexts comprising at least the secure component's pseudonym and data hash of the data corresponding to the given data's references; for the software component, retrieving the cryptogram and ciphering the requested data using the last concatenated ciphertext in said cryptogram and an applicative cryptography algorithm;
for the relying party, receiving, from the software component, at least the secure component pseudonym, the cryptogram and the ciphered requested data;
for the relying party, deciphering the received ciphered data using the last concatenated ciphertexts of the cryptogram used for the ciphering and an applicative cryptography algorithm correlated to the one of the software component;
for the relying party, calculating a hash of the deciphered data;
for the relying party, sending the pseudonym and the cryptogram to a trust service;
for the trust service, determining a secure component's secret key on the basis of the pseudonym; for the trust service, de-concatenating the cryptogram in several ciphertexts, chaining executions of a trust cryptography function correlated to the trust cryptography function of the secure component and using said determined secure component's secret key, said function being applied to the successive de-concatenated ciphertexts to extract the secure component's pseudonym and the data hash of the data corresponding to the given data's reference in successive de-ciphered plaintexts;
entrusting received deciphered data only if the extracted pseudonym corresponds to the received pseudonym, and if the data hash corresponding to the given data's reference extracted by the trust service corresponds to the data hash corresponding to the given data's reference calculated by the relying party.

The invention typically addresses an application running on a mobile device. The invention brings out to a Relying Party providing a service a quantum-safe proof of user consent, data integrity and binding to the secure component. As of today, the multiple validations achieved by the invention are only laid on PKI scheme and require significant workload from the hardware secure component whereby downgrading UX. The invention can be implemented and leveraged by HSMs.

According to the invention, the secure component only receives references of the data and process an operation on the hashes of the data. Thus, few hash data are processed instead of a whole data set. As hashes are the ones associated to genuine data, it ensures that the dubious environment does not use wrong data. With the hashes previously stored in the secure component, in case of wrong data associated, the service provider/relying party will detect that mismatched data has been provided.

The invention is a distributed non-PKIbased method. It spares secure component overloading from cryptographic computation of oversize data. It improves the secure component performance, by limiting latency, and the user experience UX while leveraging its role of enhancing Relying Party trust in the message delivered by the software component, typically a mobile application, a wallet etc. The invention provides the following evidences: proof of user consent, proof of secure component operation and wallet response binding to the secure component, proof of non-replay attack on software side, i.e. outside the secure component, proof of response data binding to the secure component, i.e. within a wallet, proof of no data tampering at software level, i.e. outside the secure component. The invention facilitates Trusted Execution Environment security evaluation with any TEE or software even on low level as the method is reliable thanks to the secure component intervention.

The invention also insures privacy as the interaction between Relying Party and Trust Service does not access information about personal data exchanged during the transaction. In terms of versatility, the invention can be applied to any CBC-based encryption protocol. The invention can typically serve EUID Wallet (eIDAS) with a secure component on board.

It is here noted that the term "pseudonym" designates, in the invention, any information enabling to anonymize the device bearer but enabling to non-ambiguously identify the secure component. This information can be carried by qualified attestation, for example in an eIDAS2 context, a QEAA. It can be any attestation identifying the secure component without disclosing the device bearer identity. The pseudonym does not disclose holder attributes and does not allow for unambiguous identification of the device holder for privacy reasons. For example, the pseudonym could be the date and time of registration of the secure component with the Trust Service associated to an identifier or not. The Trust Service thus knows actually nothing about the holder, which is an advantage of the invention.

According to a specific feature of the invention, the step of producing a cryptogram comprises a sub step of determining an initialization value as an initial input of the trust cryptography function, the trust service further performing a sub step of determining an initialization value on the basis of the pseudonym after reception of the pseudonym and of the cryptogram.

Such a feature is typical for cryptographic function including cipher block chaining. This implies the trust service to retrieve the initialization vector.

Advantageously, the step of producing a cryptogram comprises a sub-step of generating a random to be used at the first execution of the chained executions of the trust cryptography function.

This advantageous feature enables to introduce entropy in the calculation of the ciphertexts used in the invention.

According to a specific implementation, the trust cryptography function comprising a cipher block chaining and a logical function, the chaining of the trust cryptography function being performed, at the secure component, by applying, as inputs of the cipher block chaining, the result of the logical function applied to successive plaintexts comprising at least the secure component's pseudonym and data hash of the data corresponding to the given data's references and to successive ciphertexts previously obtained while chaining the executions, the chaining of the executions of the trust cryptography function at the trust service applying, as input of the cipher block chaining, the successive de-concatenated ciphertexts and extracting the secure component's pseudonym and the data hash of the data corresponding to the given data's reference by applying the logical function to the result of the trust symmetric cryptography algorithm and to the successive de-concatenated ciphertexts.

This implementation corresponds to an advantageous use of cipher block chaining.

According to a specific embodiment, said software component being adapted to open sessions with the relying party in relation with a service request, said method comprises a step of opening a session with the software component, after reception of the request for a service, on the basis of a session key shared with the software component which is further adapted to use said session key in the encryption of the requested data; said decryption step further using said session key to decrypt the received encrypted data.

Such an embodiment corresponds to the use of the invention in a context where the software application opens a session with the relying party in order to exchange data and to implement the requested service.

Advantageously, session data are used, in secure component, with data hash of the data corresponding to the given data's references to bind the cryptogram with the session.

The use of hash of the session data allows directly the relying party that the received data are from its last request and not a kind of replay/reuse of a previous session. The hash of the session key is transmitted here as an element embodying a session transcript or session related data. It is in any case something unique to the session that can be recomputed and checked by the relying party to avoid replay attack. If the hash is wrong, the relying party will notice it. Whatever is handed on by the software application to the secure component, it will be checked afterwards by the relying party and the software component cannot cheat as the session related data are known to the relying party.

The present invention also relates to a relying party configured to entrust data requested from an unsecure software component in a user equipment of a user, said user equipment having a secure component storing data hash of said data and having a pseudonym, said relying party being configured to perform the relying party's steps of a method of the invention, and thus being configured to perform the following steps:
- receive a request for a service from the software component;
- send a request for data known by the software component under given data's references and for trust proof;
- receive at least the secure component pseudonym, a cryptogram and the requested data encrypted by the software component using at least said cryptogram and a trust cryptography function, said cryptogram having been produced by concatenation of several ciphertexts successively obtained by chaining executions of a trust cryptography function using a secure component's secret key, said function being applied to successive plaintexts comprising at least the secure component's pseudonym and data hash of the data corresponding to the given data's references;
- receive, from the software component, at least the secure component pseudonym, the cryptogram and the ciphered requested data;
- decipher the received ciphered data using one of the ciphertexts concatenated in the cryptogram and an applicative cryptography algorithm correlated to the one of the software component;
- calculate a hash of the deciphered data;
- send the pseudonym and the cryptogram to a trust service for it to de-concatenate the cryptogram in several ciphertexts, to determine a secure component's secret key on the basis of the pseudonym and to chain executions of a trust cryptography function correlated to the trust cryptography function of the secure component and using said determined secure component's secret key, said function being applied to the successive de-concatenated ciphertexts to extract the secure component's pseudonym and the data hash of the data corresponding to the given data's reference in successive de-ciphered plaintexts;
- entrust received deciphered data only if the extracted pseudonym corresponds to the received pseudonym, and if the data hash corresponding to the given data's reference extracted by the trust service corresponds to the data hash corresponding to the given data's reference calculated by the relying party.

The invention also relates to a user equipment having an unsecure software component adapted to request service at a relying party and a secure component storing data hash of said data and having a pseudonym, said UE being configured to perform the software component and the secure component's steps of a method of the invention, said software component being thus configured to perform the following steps:
- send a request for a service to a relying party;
- receive a request for data known by the software component under given data's references and for trust proof;
- send the given data's references to the secure component;
- retrieve a cryptogram from the secure component, said cryptogram being produced by concatenation of several ciphertexts successively obtained by chaining executions of a trust cryptography function using a secure component's secret key, said function being applied to successive plaintexts comprising at least the secure component's pseudonym and data hash of the data corresponding to the given data's references;
- cipher the requested data using one of the ciphertexts concatenated in said cryptogram and an applicative cryptography algorithm;

send at least the secure component pseudonym, the cryptogram and the ciphered requested data to the relying party for the ciphered requested data to be deciphered using the cryptogram and an applicative cryptography algorithm correlated to the one of the software component and to calculate a hash of the deciphered data and for the pseudonym and the cryptogram to be forwarded to a trust service for a secure component's secret key to be determined on the basis of the pseudonym and for the cryptogram to be de-concatenated in several ciphertexts, and for executions of a trust cryptography function correlated to the trust cryptography function of the secure component and using said determined secure component's secret key to be chained, said function being applied to the successive de-concatenated ciphertexts to extract the secure component's pseudonym and the data hash of the data corresponding to the given data's reference in successive de-ciphered plaintexts;
said secure component being thus configured to perform the step of producing a cryptogram being a concatenation of several ciphertexts successively obtained by chaining executions of a trust cryptography function using a secure component's secret key, said function being applied to successive plaintexts comprising at least the secure component's pseudonym and data hash of the data corresponding to the given data's references;
the deciphered data being trusted at the relying party only if the extracted pseudonym corresponds to the received pseudonym, and if the data hash corresponding to the given data's reference extracted by the trust service corresponds to the data hash corresponding to the given data's reference calculated by the relying party

The invention at last relates to a trust service configured to support the entrusting of data requested by a relying party under given data's references, said requested data coming from an unsecure software component knowing the requested data in a user equipment of a user and being configured to cipher the requested data, said user equipment having a secure component storing data hash of said data and having a pseudonym, said trust service being further configured to:
receive, from the relying party, a pseudonym of the secure component and a cryptogram obtained by concatenation of several ciphertexts successively obtained by chaining executions of a trust cryptography function using a secure component's secret key, said function being applied to successive plaintexts comprising at least the secure component's pseudonym and data hash of the data corresponding to the given data's references determine a secure component's secret key on the basis of the pseudonym;
de-concatenate the cryptogram in several ciphertexts, chaining executions of a trust cryptography function correlated to the trust cryptography function of the secure component and using said determined secure component's secret key, said function being applied to the successive de-concatenated ciphertexts to extract the secure component's pseudonym and the data hash of the data corresponding to the given data's reference in successive de-ciphered plaintexts;
data deciphered by the relying party using the one of the concatenated ciphertexts of the cryptogram used for the ciphering in said cryptogram and an applicative cryptography algorithm being trusted only if the extracted pseudonym corresponds to the received pseudonym, and if the data hash corresponding to the given data's reference extracted by the trust service corresponds to the data hash corresponding to the given data's reference calculated by the relying party.

To the accomplishment of the foregoing and related ends, one or more embodiments comprise the features hereinafter fully described and particularly pointed out in the claims.

### Brief description of the drawings

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents
[Fig 1] schematically shows the environment of the invention and the successive steps of the invention;
[Fig 2] schematically shows the production of the cryptogram of the invention by the secure component;
[Fig 3] schematically shows the exchanges between the different entities of the invention;
[Fig 4] schematically shows the method as implemented in a trust service as used in the invention;
[Fig 5] schematically shows the deciphering of the cryptogram as performed by the trust service.

### Detailed description of embodiments of the invention

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

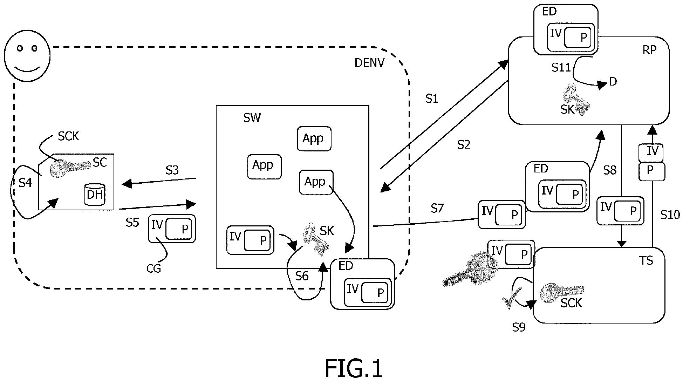

[Fig 1] schematically shows the context of the invention where an application App is installed as a software component SW in a dubious environment DENV in a user equipment further having a secure component SC, generally a hardware component constituting a secure execution environment and storage. The terms "software component" designates any application, wallet etc. executed by a controller in the device, or user equipment. In the following description, the generic term "application" is used to designate such a software component.

The application App is adapted to request a service in a step S1 at a relying party RP. The application App is further adapted to receive, in a step S2 a request for data and data trust proof of authenticity. The invention proposes to provide a trust proof based on the implication of a secure component. This last request comprises requested data's references. Such data's references are for example "attestation_age", "attestation_residence", "credentials" etc. It is a name of a data or metadata referencing data etc...

For the implementation of the invention, the secure component SC has a pseudonym SCP and stores at least data hash DH of the data, said data themselves being besides stored in the dubious environment and corresponding to the requested data of which the data's references are received.

In a step S3, the application App sends the requested data's references to the secure component SC for it to prepare a trust proof P. Said trust proof P traces that it was calculated with data hash calculated from original and authentic data by a secure component SC having a given pseudonym. The proof thus enables to be sure that data as provided by the application in the dubious environment have not been tampered.

Thus, according to the invention, upon receiving a request from a Relying Party RP seeking data elements, the software component, i.e. the application App here, asks the secure component to proceed to the creation of a proof of its intervention in the provisioning of the data. Accordingly, the software component delivers to the secure component the set of data references/labels, e.g. "attestation_residence", "attestation_diploma", requested by the Relying party as well as, advantageously, pre-hashed session data, unique for the current session with the Relying party. This enables the proof to include session data which offers an additional protection against replay attacks. For this embodiment, the session data are advantageously a hash of session key SK. This session key SK is shared between the software component SW and the Relying party RP and results from a session establishment.

In a step S4, the secure component SC produces a cryptogram CG from at least the data hash of the data corresponding to the references and the pseudonym of the secure component. The cryptogram CG is obtained using a cryptography function using a secure component key SCK. This cryptography function is applied several times in chained executions on plaintext comprising at least the secure component's pseudonym and the data hash. Chaining the executions means that the result of an execution is provided as an input to the next execution of the cryptography function.

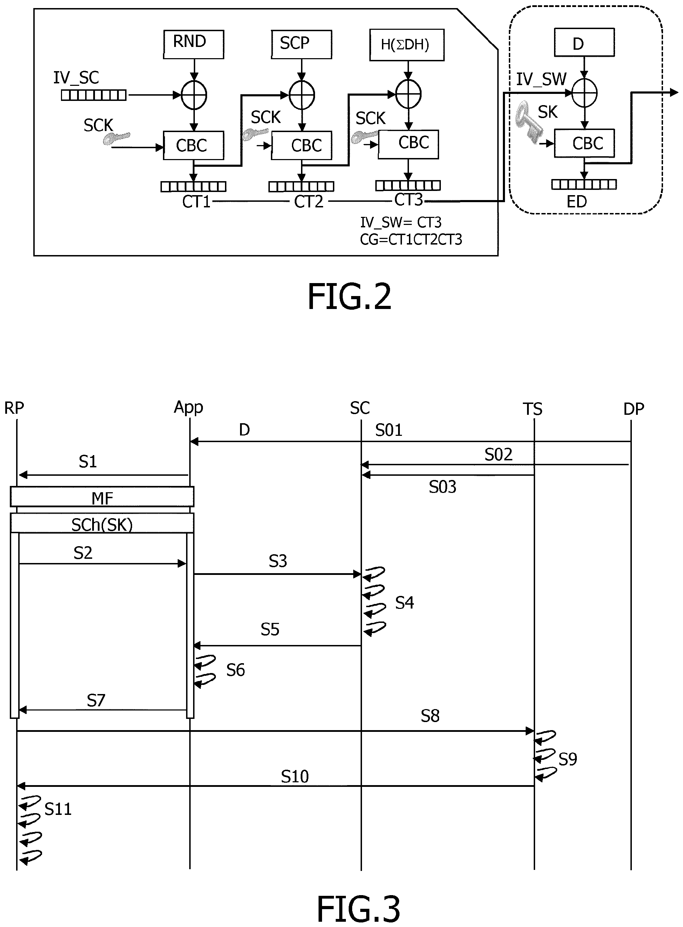

[Fig 2] schematically shows the production of the cryptogram CG by the secure element SC according to a preferred embodiment of the step S4.

According to this illustrative and preferred embodiment, the cryptography function implements a logical function, here a XOR function, and a cipher block chaining CBC. According to an advantageous feature of the invention, a random RND is generated and used at the first execution of the cryptography function to increase entropy and protect the production of the cryptogram CG according to the invention.

An initialization vector IV_SC produced by the secure component SC is also used. Later on, in the method of the invention, a trust service TS will be able to recover the initialization vector IV_SC on its side to decode data used as inputs of the cryptography function. It is here noted that the initialization vector IV_SC can be a personalized static value or a dynamically computed value and a server of the trust service is adapted to retrieve it from the pseudonym SCP or from an information associated to the pseudonym. Thus the pseudonym SCP may be used internally in the SC to potentially compute the IV_SC or to retrieve the IV_SC. In an optional less secure embodiment, the pseudonym is itself used as IV_SC.

In preferred embodiment, a basic AES-CBC encryption is utilized for the implementation of the cryptography function. The invention principle however applies as well for further CBC-based protocols e.g. AES-GCM etc.

The secure component, typically an eSE, regroups the collected data hashes and advantageously appends to it the hash of the session key SK obtained from the software component. The result of this operation is herein called ∑DH. Then the secure component performs a hash out of this result to obtain H(∑DH). It is typically a digest of the concatenation/regrouping of the different digests =H(D1)∥H(D2)... Depending on its length, the H(∑DH) is divided into sized blocks, e.g. 128-bit with AES, each of which is input as Plaintext to be XORed with the previously generated Ciphertext, then encrypted with the secret key SCK of the secure component SC. For simplification, only one round for H(∑DH) encryption is represented on [Fig 1].

Thus the secure component SC inputs its initialization vector IV_SC and uses a secret key SCK that is not shared with the software component, and computes with it an AES encryption over a random as first block in order to offset the predictable initialization vector IV_SC and ensure the necessary entropy for encrypted outputs.

In practice, according to the preferred embodiment of the invention and as shown on [Fig 2], the first execution of the cryptography function is thus fed with an initialization vector IV_SC provided to the logical function together with the generated random RND. The result of the XOR function is input at a cipher block chaining CBC. Said cipher block chaining uses the secure component key SCK. The ciphertext result CT1 issued from the cipher block CBC is kept on one side and, on the other side, input at the next logical function of the cryptography function.

The secure component then computes the second block by inputting, its pseudonym SCP as plaintext to be XORed with previously generated Ciphertext and then encrypts it with the secret key SCK. The pseudonym SCP is thus ciphered in a similar way as the random. In practice, said ciphertext CT1 is thus xored with the pseudonym SCP of the secure component SC. The use of the secure component pseudonym SCP as input of the chained cryptography function is to prove operation binding to the secure component. The output of the logical function is then input at a cipher block chaining where the key SCK is again used to get a second ciphertext CT2, which is kept on one side and input at the next chained cryptography function, i.e. at the next logical function, which is also fed with the ciphertext CT2 and with a hash of a sum of data hash H(∑DH). In practice, the secure component regroups the collected data hashes and advantageously appends to them the hash of the session key K obtained from the software component. The result is herein called data hash DH. The secure component thus fetches the hashes of requested data by looking it up from secure component ordered table advantageously present in non-volatile memory. The secure component performs a hash out of it to obtain H(∑ DH). Depending on its length, the H(∑DH) is divided into sized blocks, e.g. 128-bit with AES, each of which is input as Plaintext to be XORed with the previously generated Ciphertext, then encrypted with the secret key SK. Only one round for H(∑DH) encryption is represented on [Fig 1] for simplification. In practice, for example, when a hash=SHA512 is used, the output will be 512 bits meaning four ciphering operations are needed and resulting CT3 is indeed CT31CT32CT33CT34. In such a case, only the last ciphertext CT34 is used later on as an initialization vector for the encryption by the software component to fit with a 128-bit AES encryption to be carried out by the software component as example.

Again, advantageously, the requested data hashes are used as input together with hashed session data that were provided by the application App to the secure component SC. This enables to bind data to the session and avoids replay attacks.

The resulting last ciphertext CT3=Ciphertext(eSE) is the last part of a cryptogram CG= constituted by concatenation of the three ciphertexts CT1, CT2, CT3.

The cryptogram CG is then output from the secure component SC in a step S5 shown on [Fig 1]. According to the invention, the cryptogram CG comprising CT3 is sent to the application App installed in unsecure environment DENV The resulting last ciphertext CT3 is thus returned to the software component, i.e. the application, as a part of the cryptogram CG. The application App uses CT3 as initialization vector IV_SW to resume encryption of requested data with session key SK.

The application App, which made the request in step S3, thus performs in a step S6 an encryption of the requested data D with encipherment of data D with session key SK generated during session establishment with the Relying party. The application App uses the Ciphertext(eSE)=IV_SW=CT3 here and an encryption key used by the application App, typically a session key SK shared with the entity responsible of the service as requested. It is here noted that the ciphering by application App can be done using any keys known or shared with the relying party RP. The main important point is that the initialization vector IV used guarantees in the system that the secure component is used/part of the computation. Encrypted data ED are thus obtained. A final encrypted attribute or message herein called Ciphertext(SW) is obtained, it constitutes the encrypted data ED.

In a step S7, the application App sends the encrypted data ED with at least the cryptogram CG=CT1CT2CT3 to the relying party RP that provides the service as requested. The relying party RP forwards relevant information in a step S8 to a trust service TS in order for this trust service TS to get a proof that the data are well certified using a secure component SC. The trust service TS receives at least the cryptogram CG and an information enabling the trust service TS to retrieve the secure component key SCK and the secure component initialization vector IV_SC.

Advantageously, the information enabling the trust service TS to retrieve the secure component key SCK and the secure component initialization vector IV_SC is simply the pseudonym SCP or an information related to the pseudonym.

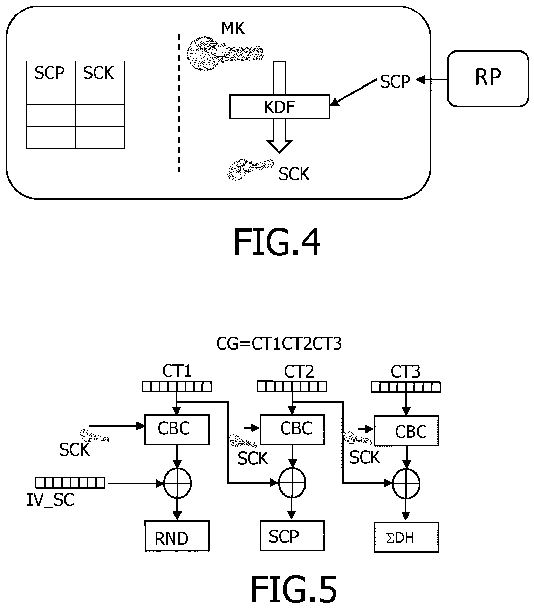

What occurs in the trust service TS is illustrated on [Fig 4] which presents two optional embodiments separated by a dashed line for the trust service TS to retrieve the secure component key SCK of the secure component SC of which it has received the pseudonym SCP or an information associated to the pseudonym SCP. In the first embodiment, as the trust service TS receives at least the pseudonym SCP or an associate information, it is able to find the SCK in a table where pseudonyms of all secure components susceptible to enter into contact with the trust service were registered. The secure component initialization vector IV_SC is also recovered in a similar way. In the second embodiment, the trust service TS retrieves the secure component key SCK by deriving a master key MK using said pseudonym SCP and a key derivation function KDF.

In a step S9, the trust service TS then decrypts the cryptogram CG, piece by piece, to check if the right pseudonym SCP was introduced in the cryptogram as well as the right data hash DH of the data D that are besides decrypted by the relying party. Advantageously the value of the initialization vector as used by the secure component is also verified.

In a step S10, relevant information is provided to the relying party RP for it to have the proof that received data were well certified using a secure component, i.e. the one of which it has received the pseudonym.

In parallel to the action of the trust service TS, the relying party RP uses the session key SK and a part of the cryptogram CG to decrypt the encrypted data in a step S 11 to obtain plaintext data D. The part of the cryptogram is CT3 in the preferred embodiment of the invention.

The check of the data hash and/or of the initialization vector can be done by the relying party once it gets back the data hash as retrieved from the trust service TS or by the trust service if ever the concerned decrypted data were provided to the trust service.

[Fig 3] describes in more details the exchanges between the different entities implicated in the invention. This figure presents how the entities are preliminary provided with the necessary data using provisioning steps. Accordingly, a first preliminary step S01 occurs where a data provider DP provides an application App with data D to be provided on request to a relying party RP. The data provider DP is an issuer of the secure component and/or an attribute provider. Data, i.e. credentials, attestations, whatever information that can be requested in all or part by Relying Parties, are thus provisioned by Data Provider(s) and hosted on board a software component communicating with a secure component. Data can be either encrypted or not within the software component.

In parallel, in a step S02, the data provider DP sends hash(es) DH of data D to a secure component SC, typically an embedded secure element eSE of a user equipment in which an application App is installed. The secure component SC thus hosts the hashes DH of the data. These hashes DH are indexed using the data references such as upon request and the secure component SC knows how to select each hashed data item.

At last, in a preliminary step S03, a trust service TS provisions the secure component SC with at least a secure component secret key SCK. The secret key SCK is typically derived from a master key MK as exposed above in [Fig 4], said derivation being made on the basis of a pseudonym SCP of the secure component SC. Typically, at registration time, the Trust Server TS assigns a secret key SCK to the secure component SC by derivation from a Master Key only known to the Trust Server. This secret key SCK can be indexed by the pseudonym in a Trust Server repository.

This key SCK can be retrieved on demand by the trust service TS on the basis of the secure component pseudonym SCP or this key SCK is listed in a table in association with the pseudonym to be recalled when needed as shown on [Fig 4]. Advantageously, the secure component SC is thus preliminary registered with the Trust Server TS by the means of a pseudonym SCP advantageously endorsed in a qualified attestation of attributes QEAAthat is obtained from a qualified trust service provider QTSP. Such an attestation on attributes is an information associated to the pseudonym in the meaning of the invention.

After the first step S1 as presented on [Fig 1], a main flow MF of exchanges between the relying party RP and the application App is performed, typically resulting in the establishment of a secure channel SCh(SK) using a session key SK. The secure channel SCh(SK) is illustrated by a rectangle laying between the application App and the relying party RP.

In step S2, the relying party RP requests a set of data at the application App. The set of data is identified by the name/reference of the requested data. Typically, age attestation, credential, PID are reference/name of data that are requested. The application besides knows the value of the age of the user, the value of his/her credential etc as provisioned by the data provider DP.

In step S3, the application App sends the references of requested data and, advantageously the hash of the session key used to establish the secure channel.

In step S4, firstly an initialization vector IV_SC is determined. This initialization vector can be the pseudonym of the secure component or a value that are later on retrievable by the trusted service TS. Then is performed, as illustrated on [Fig 2], a chained ciphering of the random, the pseudonym and the data hash as preliminary provisioned of the data of which the references were listed in the request of the relying party RP. Advantageously the hash of the session key is added as previously disclosed.

A cryptogram CG is obtained corresponding to the concatenation of the three ciphered elements or more in function of the size of the ciphered hashes, here (random)-cipher(pseudonym)-cipher(H(H(i)∥...∥H)(j)∥H(sessionkey))).

Of course, depending on the nature of the algorithm and the size of the keys, CTx segments may consist of 1 or more sub-segments, i.e. (nCT1)(nCT2)(nCT3), but this does not interfere with the principle of the invention. Similarly, the segment CT3 resulting from the hash of the hashes can be made up of either a single segment, or several encrypted segments. In all cases, it is the last segment of CT3 that will serve as the IV_SW. The size of this last segment has to coincide with the requirement of the algorithm and the size of the keys used for the secure session between the software and the RP.

The cryptogram CG is sent in a step S5 to the application App. In step S6, the data of which the references were received are encrypted using the session key SK and a part of the cryptogram, here the last segment of CT3, as initialization vector IV_SW of the cipher block chaining.

The initialization vector is thus at least a part of the cryptogram, for example here the last part of the cryptogram CG is used as an initialization vector: IV_SW=lastBlock(CG)=CT3. The software component App then delivers to the Relying party the so-obtained data concatenated as f cryptogram CG ∥ Ciphertext(SW)=CT_SW=ED} along with a QEAA asserting the eSE pseudonym. In practice, the ciphertext ED and the cryptogram CG are then sent to the relying party RP in a step S7, for it to forward at least the cryptogram CG and the secure component pseudonym SCP to the trust service in a step S8.

The Relying party RP needs then to ask the trust service TS to trigger the decipherment of the cryptogram CG. For this purpose, it delivers to the trust service the cryptogram CG=CT1CT2CT3 here. In step S9, the trust service TS determines the key corresponding to the pseudonym SCP to be used and decrypt the cryptogram CG after de-concatenation in order to check that the pseudonym used to calculate the cryptogram is the right one. The trust service TS looks up or derive the secret key SCK shared with the secure component SC by utilizing the pseudonym from the QEAA or any other reliable source/support.

The initialization vector determined from the pseudonym is used as initialization vector. Then the trust service TS starts deciphering the first block with the determined secret key SCK. Then the trust service TS deciphers the second block, then checks that the outcome of this operation matches the expected secure component pseudonym owned by the secure component. If the matching is successful, i.e. Plaintext from second block = pseudonym, it proves that operations are bind to the eSE. The trust service TS then deciphers the third block. Finally, the trust service TS returns to the Relying party the resulting hash of data H(∑DH) value, i.e. the third block, preferably except first and second block comprising the initialization vector IV and the pseudonym. The data hash as used to calculate the cryptogram are thus checked either by the trust service having besides received the data hash as calculated by the relying party from decrypted data, or by the relying party to which the data hash as decrypted are sent.

The decryption of data as received by the application App is done at a step S11 by the relying party RP. The session key SK is used to decrypt the ciphertext ED=CT_SW= Ciphertext(SW). The Relying party starts deciphering the Ciphertext(SW) with its session key SK obtained from the session with the mobile software component App to get the plaintext message. The Relying party RP hashes the data elements corresponding to Relying party's request and, advantageously, hashes the session key SK just involved in the transaction with the software component App. It enables to compare the resulting hash with the third block obtained from decipherment of the cryptogram CG. If the hash matches, the relying party RP accepts the message as being processed by a software component App, e.g. an application, a mobile wallet etc, equipped with genuine secure component SC. The relying party RP thus has the proof of data binding to the secure component SC, proof of user consent to disclose these data and proof of non-replayed secure component control. Otherwise the message contents is considered not reliable and not trusted.

In an exemplary embodiment, a part of the decrypted cryptogram, here the third block being the plaintext obtained after the last chained cryptography function, is sent by the trust service TS to the relying party RP. This A hash of the decrypted data D is then calculated: compute H=H(D(i)∥...∥H(D(j)∥H(session key)). The calculated hash is then compared to the received plaintext which corresponds to the hash of data as stored in the secure component and from which the cryptogram was calculated. The invention achieves full Relying Parties' trust in data, in post-quantum era, in distributed system, and with eSE/App work sharing while preserving privacy.

The decryption mechanism is illustrated on [Fig 5]. The cryptogram CG=CT1CT2CT3 as received by the trust service is split/de-concatenated in several ciphertext CT1, CT2 and CT3 that are used as inputs of chained cryptographic functions comprising a block cipher decryption part CBC and a logical function.

The trust service TS needs the cryptogram CG=CT1CT2CT3 that it de-concatenates before deciphering each piece once the secret key SCK and the initialization vector IV_SC have been retrieved. The three plaintexts are thus extracted and the trust service can thus check the pseudonym and the data hashes if ever it has received them from the relying party RP or sends back the data hashes to the relying party otherwise. Thus, in this last case, only the last segment is returned to the relying party RP.

Several flows/interactions between the different entities are possible according to the invention. A canonical path or baseline implementation can be considered as the option where the Trust Service returns the data hash extracted from the cryptogram to the Relying party for it to check if the computed data hash obtained from the decrypted data is identical to the data hash received from Trust Service.

Three alternatives can be considered as further possibilities to achieve the same goal. In these alternatives, the Relying party sends the data hash calculated from the decrypted data to the Trust Service. Then this latter checks whether this data hash is identical to the one obtained from decipherment of the cryptogram CG, and then send a status to the Relying party: OK, NOK.

In a first alternative, the followings are delivered by the secure component to the Application: Secure component pseudonym SCP + entire cryptogram: 1)cipher[random]-2)cipher[eSEpseudonym]-3)cipher[Hash(hash#1..hash#N] including IV_SW=CT3=last segment of 3)cipher[Hash(hash#1..hash#N].

Then the application delivers to the relying party: a) the pseudonym SCP and b) the cryptogram CG with IV_SW, both coming from the secure component and c) encrypted data=ED=Ciphertext(SW) coming from the Application. The relying party delivers to trust service a) the pseudonym SCP, b) entire cryptogram CG including IV_SW, c) Hash computed from data extracted from ED=Ciphertext(SW).

The relying party checks with shared session key SCK and IV_SW by decrypting session encrypted data, i.e. by deciphering ED=Ciphertext(SW), thus extracts data, then computes Hash of regrouped data and at last sends this Hash to Trust Service. If response from Trust Service is OK, the relying party trusts the data from within Ciphertext(SW)=ED.

Besides, the trust service looks up the shared symmetric key and initialization vector IV_SC with the secure component pseudonym. More precisely, it deciphers Ciphertexts of the cryptogram CG with shared symmetric key SCK and determined IV_SC. It enables to check that secure component pseudonym is valid. It then extracts the data Hash and compare the data Hash with the one received from the relying party RP then return response (OK/NOK) to the Relying Party.

In a second alternative, the secure component pseudonym, the generated random and the cryptogram CG are delivered by the secure component to the application. Then the cryptogram CG + the eSE pseudonym + random + Ciphertext(SW)=ED + IV_SW are delivered by the software application to the Relying Party. The cryptogram CG + eSE pseudonym + IV_SW + random + Hash computed from data extracted from the received encrypted data ED=Ciphertext(SW) are then delivered by Relying Party to Trust Service. With the shared session key and IV_SW, the Relying Party deciphers Ciphertext(SW)=ED, then extracts data then computes Hash of regrouped data then sends this Hash to Trust Service for verification. With the eSE pseudonym, the Trust Service looks up the shared symmetric key SCK and initialization vector IV_SC. With the shared key SCK and IV_SC, it then deciphers first CG block, then with eSE pseudonym deciphers the second CG block, then compares Hash received from RP, with Hash deciphered from CG third block. If both are equal, the trust service confirms that data are OK. The trust service checks as well if the received pseudonym is correct and if received random is correct.

In a third alternative, the cryptogram CG + eSE pseudonym + IV_SC + IV_SW are delivered by the secure component to the application which then delivers to Relying Party: the cryptogram CG + eSE pseudonym + encrypted data=Ciphertext(SW) + IV_SW + IV_SC. Then the Relying Party delivers to Trust Service the cryptogram CG + the pseudonym + IV_SW + Hash computed from data extracted from the Ciphertext(SW). With shared session key and IV_SW, the relying party deciphers Ciphertext(SW), then extracts data then computes Hash of regrouped data then sends this Hash to Trust Service for verification. With the eSE pseudonym, the trust service looks up the shared symmetric key and initialization vector (IV_SC) which are used to decipher first CG block. Then with eSE pseudonym, the trust service deciphers the second CG block, then compares Hash received from RP, with Hash deciphered from CG third block. If equal, the trust service confirms that received and decrypted data are OK. The trust service also checks if the received eSE pseudonym is correct.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to entrust requested data at a relying party, said requested data coming from an unsecure software component in a user equipment of a user, said user equipment having a secure component storing data hash of said data and having a pseudonym, said method comprising the steps of:
for the relying party, receiving, from the software component, a request for a service;
for the relying party, sending a request to the software component for data known by the software component under given data's references and for trust proof;
for the software component, sending the given data's references to the secure component;
for the secure component, producing a cryptogram being a concatenation of several ciphertexts successively obtained by chaining executions of a trust cryptography function using a secure component's secret key, said function being applied to successive plaintexts comprising at least the secure component's pseudonym and data hash of the data corresponding to the given data's references;
for the software component, retrieving the cryptogram and ciphering the requested data using the last ciphertext concatenated in said cryptogram and an applicative cryptography algorithm;
for the relying party, receiving, from the software component, at least the secure component pseudonym, the cryptogram and the ciphered requested data;
for the relying party, deciphering the received ciphered data using the last ciphertexts of the cryptogram used for the ciphering and an applicative cryptography algorithm correlated to the one of the software component;
for the relying party, calculating a hash of the deciphered data;
for the relying party, sending the pseudonym and the cryptogram to a trust service;
for the trust service, determining a secure component's secret key on the basis of the pseudonym;
for the trust service, de-concatenating the cryptogram in several ciphertexts, chaining executions of a trust cryptography function correlated to the trust cryptography function of the secure component and using said determined secure component's secret key, said function being applied to the successive de-concatenated ciphertexts to extract the secure component's pseudonym and the data hash of the data corresponding to the given data's reference in successive de-ciphered plaintexts;
entrusting received deciphered data only if the extracted pseudonym corresponds to the received pseudonym, and if the data hash corresponding to the given data's reference extracted by the trust service corresponds to the data hash corresponding to the given data's reference calculated by the relying party.

2. Method according to claim 1, wherein the step of producing a cryptogram comprises a sub step of determining an initialization value as an initial input of the trust cryptography function, the trust service further performing a sub step of determining an initialization value on the basis of the pseudonym after reception of the pseudonym and of the cryptogram.

3. Method according to one of previous claims, wherein the step of producing a cryptogram comprises a sub-step of generating a random to be used at the first execution of the chained executions of the trust cryptography function.

4. Method according to one of previous claims, wherein, the trust cryptography function comprising a cipher block chaining and a logical function, the chaining of the trust cryptography function being performed, at the secure component, by applying, as inputs of the cipher block chaining, the result of the logical function applied to successive plaintexts comprising at least the secure component's pseudonym and data hash of the data corresponding to the given data's references and to successive ciphertexts previously obtained while chaining the executions, the chaining of the executions of the trust cryptography function at the trust service applying, as input of the cipher block chaining, the successive de-concatenated ciphertexts and extracting the secure component's pseudonym and the data hash of the data corresponding to the given data's reference by applying the logical function to the result of the trust symmetric cryptography algorithm and to the successive de-concatenated ciphertexts.

5. Method according to one of previous claims, wherein, said software component being adapted to open sessions with the relying party in relation with a service request, said method comprises a step of opening a session with the software component, after reception of the request for a service, on the basis of a session key shared with the software component which is further adapted to use said session key in the encryption of the requested data; said decryption step further using said session key to decrypt the received encrypted data.

6. Method according to claim 5, wherein session data are used, in secure component, with data hash of the data corresponding to the given data's references to bind the cryptogram with the session.

7. Relying party configured to entrust data requested from an unsecure software component in a user equipment of a user, said user equipment having a secure component storing data hash of said data and having a pseudonym, said relying party being configured to perform the relying party's steps of a method of one of previous claims 1 to 6, and thus being configured to perform the following steps:
- receive a request for a service from the software component;
- send a request for data known by the software component under given data's references and for trust proof;
- receive at least the secure component pseudonym, a cryptogram and the requested data encrypted by the software component using at least said cryptogram and a trust cryptography function, said cryptogram having been produced by concatenation of several ciphertexts successively obtained by chaining executions of a trust cryptography function using a secure component's secret key, said function being applied to successive plaintexts comprising at least the secure component's pseudonym and data hash of the data corresponding to the given data's references;
- receive, from the software component, at least the secure component pseudonym, the cryptogram and the ciphered requested data;
- decipher the received ciphered data using one of the ciphertexts concatenated in the cryptogram and an applicative cryptography algorithm correlated to the one of the software component;
- calculate a hash of the deciphered data;
- send the pseudonym and the cryptogram to a trust service for it to de-concatenate the cryptogram in several ciphertexts, to determine a secure component's secret key on the basis of the pseudonym and to chain executions of a trust cryptography function correlated to the trust cryptography function of the secure component and using said determined secure component's secret key, said function being applied to the successive de-concatenated ciphertexts to extract the secure component's pseudonym and the data hash of the data corresponding to the given data's reference in successive de-ciphered plaintexts;
- entrust received deciphered data only if the extracted pseudonym corresponds to the received pseudonym, and if the data hash corresponding to the given data's reference extracted by the trust service corresponds to the data hash corresponding to the given data's reference calculated by the relying party.

8. User equipment having an unsecure software component adapted to request service at a relying party and a secure component storing data hash of said data and having a pseudonym, said UE being configured to perform the software component and the secure component's steps of a method of one of previous claims 1 to 6, said software component being thus configured to perform the following steps:
send a request for a service to a relying party;
receive a request for data known by the software component under given data's references and for trust proof;
send the given data's references to the secure component;
retrieve a cryptogram from the secure component, said cryptogram being produced by concatenation of several ciphertexts successively obtained by chaining executions of a trust cryptography function using a secure component's secret key, said function being applied to successive plaintexts comprising at least the secure component's pseudonym and data hash of the data corresponding to the given data's references;
cipher the requested data using one of the ciphertexts concatenated in said cryptogram and an applicative cryptography algorithm;
send at least the secure component pseudonym, the cryptogram and the ciphered requested data to the relying party for the ciphered requested data to be deciphered using the cryptogram and an applicative cryptography algorithm correlated to the one of the software component and to calculate a hash of the deciphered data and for the pseudonym and the cryptogram to be forwarded to a trust service for a secure component's secret key to be determined on the basis of the pseudonym and for the cryptogram to be de-concatenated in several ciphertexts, and for executions of a trust cryptography function correlated to the trust cryptography function of the secure component and using said determined secure component's secret key to be chained, said function being applied to the successive de-concatenated ciphertexts to extract the secure component's pseudonym and the data hash of the data corresponding to the given data's reference in successive de-ciphered plaintexts;
said secure component being thus configured to perform the step of producing a cryptogram being a concatenation of several ciphertexts successively obtained by chaining executions of a trust cryptography function using a secure component's secret key, said function being applied to successive plaintexts comprising at least the secure component's pseudonym and data hash of the data corresponding to the given data's references;
the deciphered data being trusted at the relying party only if the extracted pseudonym corresponds to the received pseudonym, and if the data hash corresponding to the given data's reference extracted by the trust service corresponds to the data hash corresponding to the given data's reference calculated by the relying party.

9. Trust service configured to support the entrusting of data requested by a relying party under given data's references, said requested data coming from an unsecure software component knowing the requested data in a user equipment of a user and being configured to cipher the requested data, said user equipment having a secure component storing data hash of said data and having a pseudonym, said trust service being further configured to:
receive, from the relying party, a pseudonym of the secure component and a cryptogram obtained by concatenation of several ciphertexts successively obtained by chaining executions of a trust cryptography function using a secure component's secret key, said function being applied to successive plaintexts comprising at least the secure component's pseudonym and data hash of the data corresponding to the given data's references
determine a secure component's secret key on the basis of the pseudonym;
de-concatenate the cryptogram in several ciphertexts, chaining executions of a trust cryptography function correlated to the trust cryptography function of the secure component and using said determined secure component's secret key, said function being applied to the successive de-concatenated ciphertexts to extract the secure component's pseudonym and the data hash of the data corresponding to the given data's reference in successive de-ciphered plaintexts;
data deciphered by the relying party using the one of the concatenated ciphertexts of the cryptogram used for the ciphering in said cryptogram and an applicative cryptography algorithm being trusted only if the extracted pseudonym corresponds to the received pseudonym, and if the data hash corresponding to the given data's reference extracted by the trust service corresponds to the data hash corresponding to the given data's reference calculated by the relying party.
